# EUROPEAN PATENT SPECIFICATION

(11) **EP 2 899 016 B1**
(45) Date of publication and mention of the grant of the patent: **07.11.2018**
(21) Application number: 15152684.5
(22) Date of filing: 27.01.2015
(51) Int. Cl.: B32B 5/02, B32B 5/04, B32B 5/12, B32B 5/26, B32B 27/12, B32B 27/30, B32B 27/32, B32B 27/34, B32B 27/36, B32B 27/40, B32B 3/26, A43B 23/02

(54) **MULTILAYERED TEXTILE MATERIAL FOR FORMING THREE DIMENSIONAL OBJECTS**
MEHRSCHICHTIGES TEXTILMATERIAL ZUR FORMUNG VON DREIDIMENSIONALEN GEGENSTÄNDEN
MATÉRIAU TEXTILE MULTICOUCHES POUR FORMER DES OBJETS TRIDIMENSIONNELS

(30) Priority: 27.01.2014 US 201414165468
(43) Date of publication of application: 29.07.2015
(73) Proprietor: Adidas AG, 91074 Herzogenaurach (DE)
(72) Inventor: Tarrier, James, 91074 Herzogenaurach (DE); Leimer, Robert, OR 97217 Portland (US); Holmes, Christopher Edward, 91074 Herzogenaurach (DE); Henderson, Mark Andrew, OR 97217 Portland (US)
(74) Representative: Wegner, Hans

(56) References cited:
- WO-A2-2014/074966
- US-A1- 2002 012 784
- US-A1- 2005 077 430
- US-A1- 2011 219 943

## Description

### FIELD OF THE INVENTION

The present invention relates to a material for three dimensional products with a very low weight and improved tensile strength.

### BACKGROUND

For many years, there has been a need to develop lighter and stronger materials to improve quality, safety, and efficiency in a vast array of industries, including but not limited to aerospace, automotive, marine, apparel, sporting goods, fiber optics, industrial safety, military and law enforcement, and electronics.

Since the 1950's, there have been numerous breakthroughs in the development of high performance fibers having many times the strength of steel at a fraction of the weight. Examples of such high performance fibers include but are not limited to polyester fibers (such as the products sold under the trade name Dacron®), nylon fibers, aramid fibers (such as the products sold under the trade names Kevlar®, Techora®, and Twaron®), carbon fibers, ultra high molecular weight polyethylene ("UHMWPE") (such as products sold under the trade names Ceran®, Dyneema®, and Spectra®), liquid crystal polymers ("LCP") (such as products sold under the trade name Vectran®) and (poly (p-phenylene-2, 6-benzobisoxazole)) ("PBO") (such as products sold under the trade name Zylon®), and polyethylene naphthalate PEN fibers (such as products sold under the trade name Pentex®). For many years, these high performance fibers have been used in woven and non-woven arrangements to form multilayered composites and laminated structures.

For example, WO 2012/018959 describes the problems with using the high performance fibers in a woven configuration. Specifically, the weaving processes induce crimp in the fibers, which cause stress concentrations and wear points that significantly reduce the strength and long term performance of the fabric.

US 5,333,568 also describes the crimping problem with woven configurations, while describing a reinforced nonwoven laminate that utilizes a reinforcing sheet of unidirectional extruded fibers in which the reinforcing sheet or sheets form one or more uni-tapes laminated to outer layers of polyester film. The fibers are uniformly embedded in the uni-tape via an elastomeric polymer matrix. The low elasticity of the high performance fibers ensures that the laminate does not stretch under a load applied in the direction of the fiber orientation. While stretch resistance is a key parameter for applications such as sails, where the laminate must be flexible without deforming under a load, such stretch resistance is problematic when the laminate is used in a process that requires some material deformation to form three dimensional objects.

In many cases, the materials described in US 5,333,568 are manufactured with two or four layers of UHMWPE fibers sandwiched between two outer layers of polyester, wherein the fibers are superimposed in non-bias (0°/90°) and bias (0°/90°/+45°/-45°) configurations in a variety of weights. Other outer layer materials that have been used with the UHMWPE fiber layers include elastomeric thermoset polymers (such as urethanes and silicones), thermoplastics (such as nylon), low density polyethylene, polypropylene, thermoplastic polyurethanes, and hot melt adhesives (such as polyolefins and polyamides).

While having a very low weight and high tensile strength, these materials have issues with crinkling, noise, unpleasant textures, and a lack of elasticity and softness. In short, the material has the look and feel of a crinkly plastic bag. Furthermore, in use, the materials often lack seam strength, stitch sheer strength, thread strength, UV resistance, and stretchability. For example, Figures 1 and 2 illustrate a shoe 28 formed with the material described in US 5,333,568. As illustrated in these images, when the material described in US 5,333,568 is placed over a shoe last to form a three dimensional shoe upper 26, the material was incapable of being stretched over the shoe last to create the three dimensional shoe upper shape. Rather, the material had to be cut and sewn in multiple places to form the rounded shape needed for the shoe upper 26.

US 5,935,678 describes a laminate structure in sheet form with first and second arrays of high performance, unidirectionally-oriented fiber bundles. The second array of fiber bundles is cross-plied at an angle to the first array of fiber bundles. A polymeric film resides between the first and second cross-plied arrays of fiber bundles to adhere the first and second arrays of fiber bundles together. This design provides a rigid structure for use as a ballistic laminate structure, but is problematic when the laminate is used in a process that requires some material deformation to form three dimensional objects.

US 2013/0219600 describes a multilayer non-woven fabric material composed of two or four non-woven fiber sheets of aramide/polyethylene fibers, impregnated with resin and/or a filler material, and oriented at various angles, which is used for manufacturing protection garments. The superimposed non-woven fabric layers are not bonded or glued together as a way to provide a flexible material for use in protective garments. While this design provides the necessary flexibility for use in garments, the design is similar to the flexible design taught in US 5,333,568, and therefore also does not provide the necessary elasticity when the laminate is used in a process that requires some material deformation to form three dimensional objects. Furthermore, because the fabric layers are not bonded or glued together, the material has minimal, if any, delamination strength. < Insert description page 3a here. >

Thus, it is desirable to provide a nonwoven multilayered composite and/or laminated structure, wherein each layer comprises unidirectional high performance fibers, which provides a very low weight material with high tensile strength and some elasticity so that the structure may be used in a process that requires some material deformation to form three dimensional objects.

### SUMMARY

The invention is defined by independent claim 1. Further embodiments of the invention are described in the dependent claims. A multilayered material for forming three dimensional objects according to the invention comprises: a first, a second, and a third nonwoven fiber layer, each fiber layer comprising a plurality of unidirectionally oriented fibers; wherein the second fiber layer is positioned adjacent the first fiber layer so that the fibers in the second fiber layer form an angle of -40° with respect to the fibers in the first fiber layer, and the third fiber layer is positioned adjacent an opposite side of the first fiber layer so that the fibers in the third fiber layer form an angle of +40° with respect to the fibers in the first fiber layer, or the second fiber layer is positioned adjacent the first fiber layer so that the fibers in the second fiber layer form an angle of -50° with respect to the fibers in the first fiber layer, and the third fiber layer is positioned adjacent an opposite side of the first fiber layer so that the fibers in the third fiber layer form an angle of +50° with respect to the fibers in the first fiber layer; and a matrix material comprising at least one first outer layer adhered to a side of one of the three nonwoven fiber layers; wherein the multilayered material comprises elastic properties that allow the multilayered material to deform by stretching the multilayered material over a three dimensional mold to form a footwear object.

Document US 2011/0219943 A1 discloses a multilayered composite fabric, the composite fabric comprising a first fabric comprising first and second non-woven unidirectionally oriented fiber layers. Each of the fiber layers is in a resin matrix and the fibers comprise high tenacity fibers. The fibers in the two fiber layers are disposed at an angle with respect to each other. The composite fabric includes a second fabric comprising multi-directionally oriented fibers optionally in a resin matrix. The second fabric also comprises high tenacity fibers. The first and second fabric are bonded together to form the composite fabric, which has improved ballistic resistant properties. Plastic films may be adhered to one or both outer surfaces of the first fabric and can serve as the bonding agent between the two fabrics.

Document US 2005/0077430 A1 discloses a parachute that is formed from a non-woven composite material. The non-woven composite material is formed by fusing a plurality of mono-filament fibers between thin layers of plastic. The fibers are positioned in directions within the material according to the stresses on the panels of the parachute. The panels of the parachute may be joined using fusing, adhesives or other non-sewing methods. The material may also be formed to have a three dimensional shape for each panel.

The international patent application publication WO 2014/074966 shows three-dimensional articles comprising flexible composite materials.

In some embodiments, the matrix material may further comprise a second outer layer adhered to a side of another one of the at least three nonwoven fiber layers. At least one of the outer layers may be formed of thermoplastic polyurethane and comprises screen printing.

In other embodiments, the multilayered material also comprises at least one thermoplastic polyurethane outer layer adhered to a side of one of the at least three nonwoven fiber layers. The matrix material may further comprise a second thermoplastic polyurethane outer layer adhered to a side of another one of the at least three nonwoven fiber layers. At least one of the thermoplastic polyurethane outer layers may comprise screen printing.

The matrix material may be formed of materials selected from the group consisting of thermoplastic polyurethane, other polyurethanes, silicone, ethylene propylene diene, polyvinyl chloride, thermoplastic elastomer, polylactic acid, polyamide, and polyethylene.

According to some embodiments, the fibers are formed of materials selected from the group consisting of ultra high molecular weight polyethylene, other polyethylenes, polyester, nylon, Basalt, aramid, carbon, polymer/carbon composites, liquid crystal polymers, and high performance films.

In some embodiments, the multilayered material further comprises a woven layer. The woven layer may be printed and/or colored.

The at least three nonwoven fiber layers may be punctured to improve breathability of the multilayered material. The multilayered material may further comprise a wicking lining to transport moisture away from the multilayered material. In other embodiments, the multilayered material may further comprise a hydrophilic layer to pull moisture away from the multilayered material.

### BRIEF DESCRIPTION OF THE DRAWINGS

In the following detailed description, embodiments of the invention are described referring to the following figures:
Figure 1 is a side view of a shoe formed with a conventional multilayered textile material with a 0°/90° configuration of two fiber layers and two outer layers of polyester.
Figure 2 is a perspective view of the shoe of Figure 6.
Figure 3 is an exploded top view of one example of a process of forming a multilayered textile material with a -40°/0°/40° configuration between the fiber layers, according to certain embodiments of the present invention.
Figure 4 is an exploded top view of the process of forming a multilayered textile material with a -50°/0°/50° configuration between the fiber layers, according to certain embodiments of the present invention.
Figure 5 is an exploded top view of the process of forming a multilayered textile material with a -40°/0°/40° configuration between the fiber layers, according to certain embodiments of the present invention.
Figure 6 is an exploded top view of the process of forming a multilayered textile material with a -50°/0°/50° configuration between the fiber layers, according to certain embodiments of the present invention.
Figures 7a-7c are left side, right side, and front views of a multilayered textile material, according to certain embodiments of the present invention, being stretched over a three dimensional mold.
Figure 8 is a perspective view of a shoe formed with a multilayered textile, according to certain embodiments of the present invention.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

Embodiments of the present invention provide textile materials having low weight, high tensile strength, and some elasticity for use with processes that require some material deformation to form three dimensional objects. While the textile materials are discussed having three fiber layers and two outer layers, they are by no means so limited. Rather, embodiments of the textile materials may include any suitable number of fiber and/or other layers as needed or desired to achieve three dimensional objects with the desired properties.

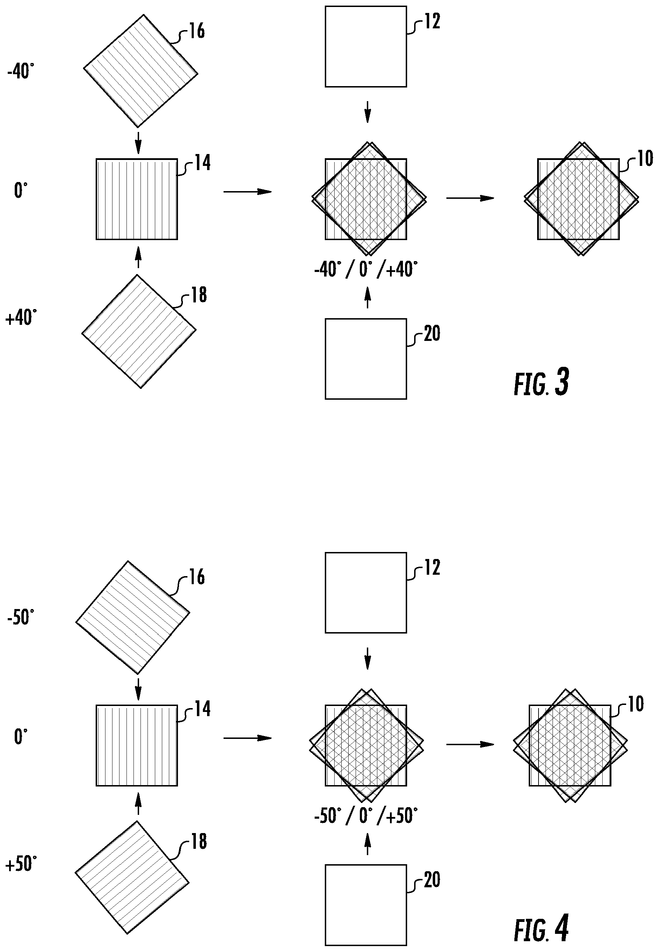

Figures 3-6 illustrate embodiments of a multilayered textile material 10. In these embodiments, the material 10 comprises a first outer layer 12, a first layer of unidirectionally oriented fibers (i.e., nonwoven fiber layer) 14, a second layer of unidirectionally oriented fibers (i.e., nonwoven fiber layer) 16 oriented at a first angle relative to the first fiber layer 14, a third layer of unidirectionally oriented fibers (i.e., nonwoven fiber layer) 18 oriented at a second angle relative to the first fiber layer 14, and a second outer layer 20.

While the embodiments illustrated in Figures 3-6 indicate that the material 10 includes three fiber layers, the material 10 may include any suitable combination of layers including but not limited to one nonwoven fiber layer 14, 16, or 18, two nonwoven fiber layers oriented at any suitable angle to each other in any combination of nonwoven fiber layers, or more than three nonwoven fiber layers.

According to certain embodiments, the first and second outer layers 12, 20 (i.e., matrix material) are formed of thermoplastic polyurethane ("TPU"). TPU provides good elasticity properties, which allow the material 10 to stretch when a load is applied in any direction that does not align with a direction of fiber orientation. The amount of stretch provided by the TPU material increases as the angle between the direction of the load application and the direction of the fiber orientation increases. In other words, when the direction of the load application is only a few degrees from the direction of the fiber orientation, the material 10 will stretch a small amount, but the amount of stretch will increase as the angle widens between the direction of the load application and the direction of the fiber. Other outer layer materials may include polyurethane ("PU"), silicone, ethylene propylene diene ("EPDM"), polyvinyl chloride ("PVC"), thermoplastic elastomer ("TPE"), polylactic acid ("PLA"), polyamide ("PA"), and polyethylene ("PE"), or other suitable materials. The first and second outer layers 12, 20 may be formed of the same or different materials to achieve the desired properties.

In some embodiments, the fibers in the first, second, and third fiber layers 14, 16, 18 are formed of UHMWPE. In certain embodiments, the UHMWPE fibers may be up to 15 times stronger than steel, but up to 40% lighter than materials like aramids. UHMWPE fibers have very little elasticity and are very difficult to break. Other fiber materials may include polyester fibers (such as the products sold under the trade name Dacron®), nylon fibers, natural fibers such as Basalt, aramid fibers (such as the products sold under the trade names Kevlar®, Techora®, and Twaron®), carbon fibers, high performance films (such as polyethylene naphthalate ("PEN") films and products sold under the trade name Mylar®), polymer/carbon composites (such as single-wall carbon nanotubes ("SWCNT") or graphene) and may include but is not limited to combinations of polyvinylalcohol/carbon and/or polyacrylonitrile/carbon, liquid crystal polymers ("LCP") (such as products sold under the trade name Vectran®) and (poly (p-phenylene-2, 6-benzobisoxazole)) ("PBO") (such as products sold under the trade name Zylon®), polyethylenes (such as products sold under the trade names Ceran®, Dyneema®, and Spectra®) and PEN fibers (such as products sold under the trade name Pentex®), or other suitable materials. The first, second, and third fiber layers 14, 16, 18 may be formed of the same or different materials to achieve the desired properties.

In certain embodiments, the fibers within each individual fiber layer may be formed of the same material with the same properties. In other embodiments, one or more of the individual fiber layers may include fibers formed of at least two different materials. The fibers may be arranged within the individual fiber layer to create zones or in certain orders to vary the material properties of the individual fiber layer.

In certain embodiments, the fibers have a thickness of less than 1 denier. The tear strength of the material 10 is influenced by the density or number of crossover points between the fiber layers 14, 16, 18. Higher crossover densities maybe achieved by smaller diameter fibers and/or increasing the number of threads in a given area. However, a person of ordinary skill in the relevant art will understand that different fiber thicknesses and concentrations may be used in the various fiber layers 14, 16, 18 to achieve the desired properties.

Each fiber layer 14, 16, 18 may be formed by coating each fiber with resin and pulling the resin-coated fibers in parallel through a die so that the fibers are laterally married to form a unidirectional tape. Additional description of one possibility regarding the formation of each fiber layer 14,16,18 is found in U.S. Patent No. 5,333,568 and U.S. Patent No. 5,470,632.

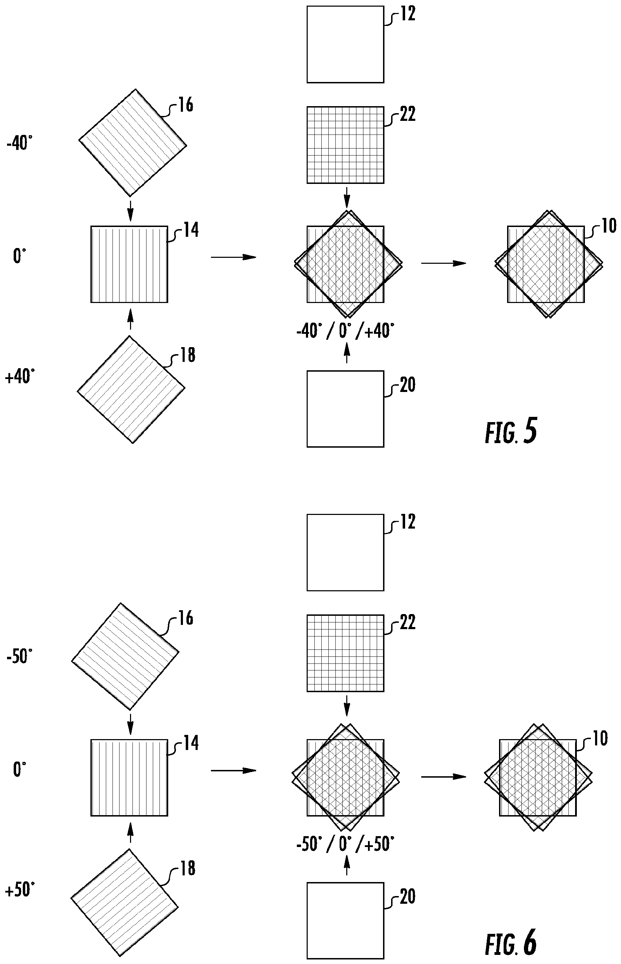

The three fiber layers 14, 16, 18 are arranged in a regular pattern at angles of (-40°/0°/40°) or (-50°/0°/50°), as illustrated in Figures 3-6. In other words, in the examples illustrated in Figures 3 and 5, the second fiber layer 16 is positioned adjacent the first fiber layer 14 so that the fibers in the second fiber layer 16 form an angle of -40° with respect to the fibers in the first fiber layer 14, and the third fiber layer 18 is positioned adjacent an opposite side of the first fiber layer 14 so that the fibers in the third fiber layer 18 form an angle of +40° with respect to the fibers in the first fiber layer 14.

Furthermore, the orientation of the fiber layers at these angles is symmetrical, such as the (-40°/0°/40°) and (-50°/0°/50°) embodiments illustrated in Figures 3-6.

Similar angles may be used for the arrangement of four or more fiber layers in the material 10.

Other patterns, such as an asymmetrical pattern of (-90°/0°/45°), were tested but did not provide the appropriate amount of stretch to allow the material 10 to form the three dimensional object without wrinkles or folds. The resin-coating on the fibers that bonds the fibers to form the unidirectional tape of each fiber layer 14, 16, 18 may also be activated with heat and/or pressure to adhere the fiber layers 14, 16, 18 to each other.

As illustrated in Figures 3-6, the outer layers 12, 20 (i.e., matrix material) are placed above and below the three fiber layers 14, 16, 18. An adhesive, in addition to heat and/or pressure, may be used to bond the outer layers 12, 20 to the fiber layers 16 and 18. The resulting material 10 is a two-dimensional composite sheet.

In the embodiments where the outer layers 12, 20 are formed of TPU, the resulting material 10 has a nice appearance and feel, and the outer layers 12, 20 provide a surface that is easily connectable to other elements, such as other TPU layers and/or other TPU elements. For example, in the case of footwear, the material 10 may be easily connected to heel counters, midsoles, or TPU foils.

The features of material 10 according to certain exemplary embodiments are set forth below. However, these are just examples, as one of ordinary skill in the relevant art would understand that there may be other combinations and/or properties of the material 10 that are not illustrated in the table below.

| Material Description | Elasticity | Weight | Tensile Strength |
|---|---|---|---|
| -40°/0°/40° TPU outer layers | 0° direction - 4% | 183 g/sqm | 0° direction -148 N/cm |
| | 90° direction - 56% | | 90° direction - 113 N/cm |
| | 52% increase in elasticity in the 90° direction | | 24% decrease in tensile strength in the 90° direction |
| -50°/0°/50° TPU outer layers | 0° direction - 4% | 180 g/sqm | 0° direction - 156 N/cm |
| | 90° direction - 26% | | 90° direction - 135 N/cm |
| | 22% increase in elasticity in the 90° direction | | 13% decrease in tensile strength in the 90° direction |

The values described in the table above represent the test results achieved from testing single samples of two embodiments of the material 10. Test results for additional samples of these embodiments may generate values that are higher or lower than those shown in the table above.

By way of comparison, the amount of elasticity demonstrated in a -90°/0°/45° polyester outer layer and -90°/0°/45° TPU outer layer is approximately the same in both the 0° direction and the 90° direction, and the amount of tensile strength is also the same in both the 0° direction and the 90° direction. Thus, the difference between the elasticity and tensile strength exhibited in the 0° direction versus the 90° direction in the embodiments of material 10 described in the table above are indicative of the changes in material properties that would be exhibited by the various embodiments of the material 10 described herein as the angles between the fiber layers are varied.

While the values in the table above do not represent the entire range of results that may be obtained with various embodiments of the material 10, the results illustrate that the magnitude of elasticity gain in the 90° direction does not result in a corresponding magnitude of tensile strength loss in the 90° direction. In fact, the elasticity increase in the 90° direction is approximately twice the tensile strength loss in the 90 degree direction. This surprising result demonstrates that elasticity and tensile strength are not inversely and linearly correlated, but rather show that elasticity may be maximized without unduly sacrificing the material 10's tensile strength properties.

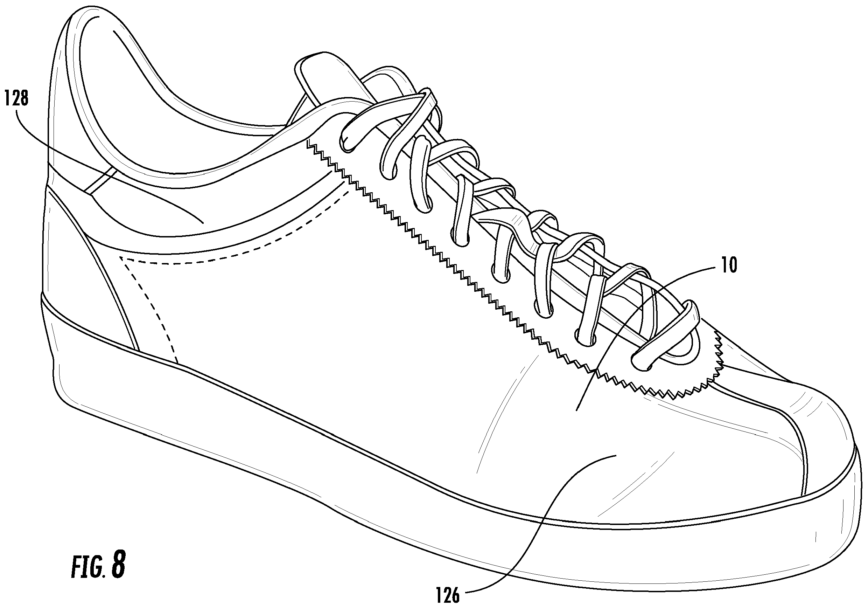

The use of outer layers 12, 20 formed of TPU also provides a surface that may be easily printed or colored, as illustrated in Figure 8. Because the material 10 typically has a translucent appearance, the print may be applied to the side of the material 10 that will form the inner side, and the printing will be visible through the material 10. As a result, the material 10 itself will serve as a coating to protect the printing. In other embodiments, the print may be applied to the side of the material 10 that will form the outer side, and an additional coating layer may be applied to protect the printing. Printing to TPU surfaces may be accomplished with known methods including but not limited to screen printing.

In other embodiments, as shown in Figures 5-6, an additional printed or colored woven layer 22 may be included in the material 10. The layer 22 may form an outer layer that is adhered to either of the outer layers 12, 20 or may be placed between any of the layers 12, 14, 16, 18, 20.

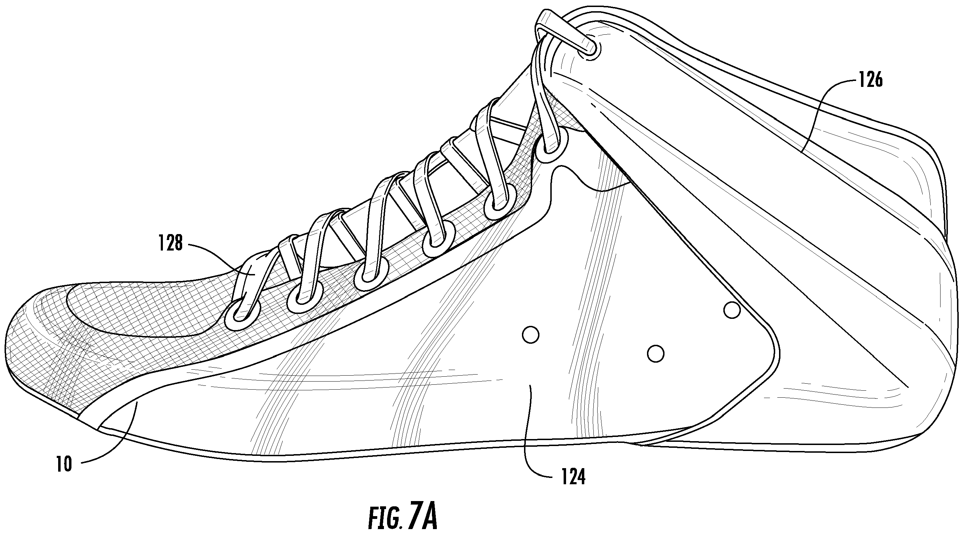

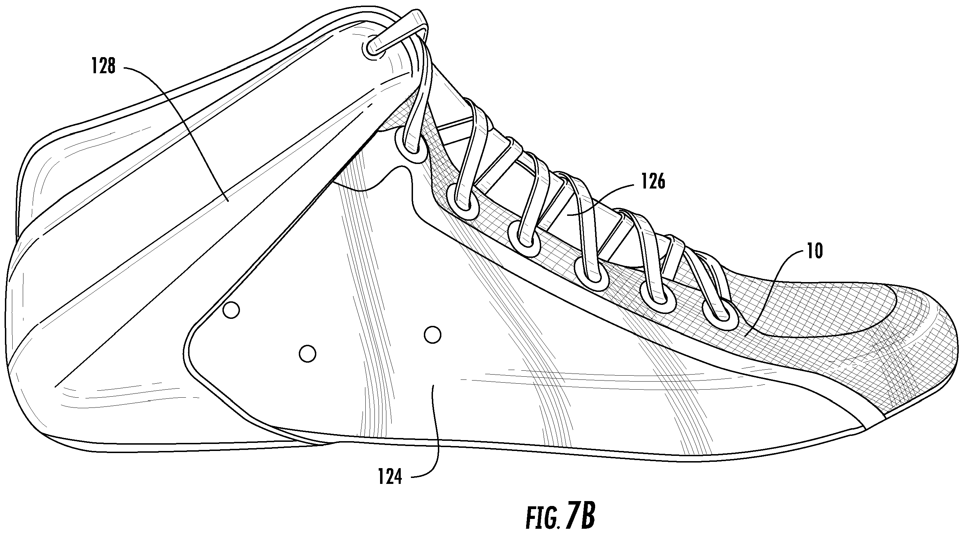

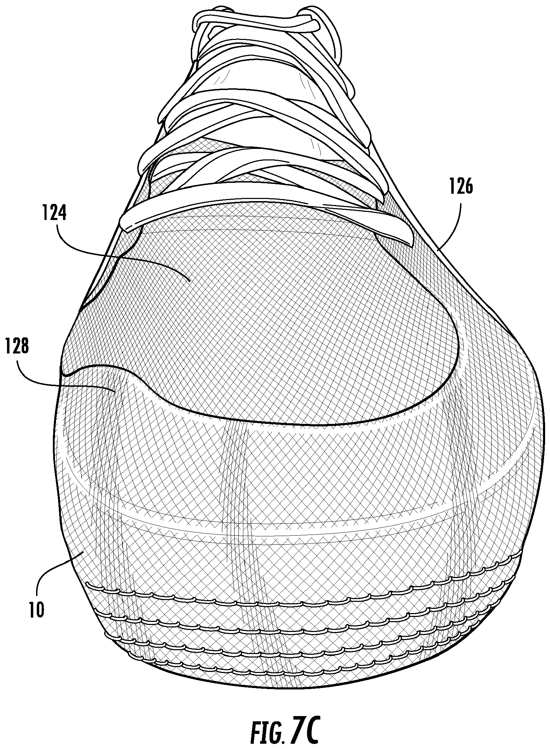

Because the fiber layers 14, 16, 18 typically do not have any breathability, perforation of the fiber layers 14, 16, 18, preferably between fibers, may be included to improve the breathability of the material. In other embodiments, a wicking lining may be included to transport moisture away from the material 10 to other areas that are not formed of the material 10, such as a breathable mesh area that maybe located adjacent the material 10, as shown in Figures 7a-7c and 9-10). In still other embodiments, the material 10 may include a hydrophilic layer that is designed to pull sweat or other moisture away from the material 10. The material 10 may include one, all, or any combination of these embodiments to improve the breathability of the material 10.

In certain embodiments, the material 10 is then stretched in certain configurations to form a three dimensional object. For example, as shown in Figures 7a-7c, the material 10 is deformed through stretching to conform to the shape of a three dimensional mold 124. In these embodiments, the mold 124 is a shoe last that is used to form a shoe upper 126 for a shoe 128. However, a person of skill in the relevant art will understand that the material 10 may be used to conform to any three dimensional mold 124 where some deformation of the material 10 is required for the material 10 to conform to the mold 124 with a smooth appearance.

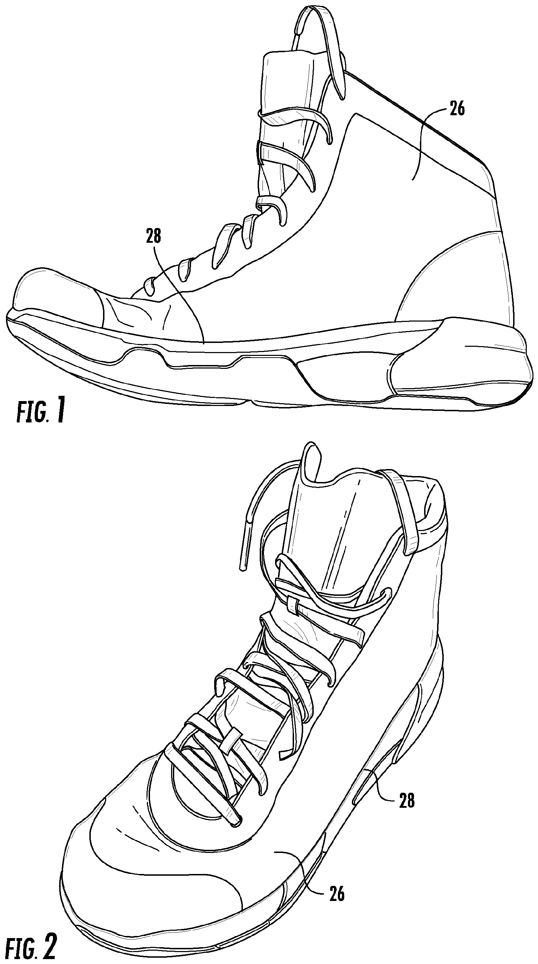

A finished three dimensional product formed through the deformation of the material 10 by stretching the material 10 over a three dimensional mold 124 is illustrated in Figure 8. While the product shown in Figure 8 is a shoe 128, one of skill in the relevant art will understand that the material 10 described above may be used with any three dimensional mold 124 to stretch and deform the material 10 into a suitable three dimensional object. As shown in Figure 8, and in comparison to Figures 1-2, the material 10 has a smooth surface appearance without the need to cut or sew the material 10 to achieve the required three dimensional shape.

The present invention is not limited to the embodiments described above or depicted in the drawings.

Rather, the scope of the invention is defined by the appended independent claim 1.

## Claims

1. A multilayered material (10) for forming three dimensional objects, comprising:
(a) a first, a second, and a third nonwoven fiber layer (14, 16, 18), each fiber layer (14, 16, 18) comprising a plurality of unidirectionally oriented fibers; wherein
(b1) the second fiber layer (16) is positioned adjacent the first fiber layer (14) so that the fibers in the second fiber layer (16) form an angle of -40° with respect to the fibers in the first fiber layer (14), and the third fiber layer (18) is positioned adjacent an opposite side of the first fiber layer (14) so that the fibers in the third fiber layer (18) form an angle of +40° with respect to the fibers in the first fiber layer (14), or
(b2) the second fiber layer (16) is positioned adjacent the first fiber layer (14) so that the fibers in the second fiber layer (16) form an angle of -50° with respect to the fibers in the first fiber layer (14), and the third fiber layer (18) is positioned adjacent an opposite side of the first fiber layer (14) so that the fibers in the third fiber layer (18) form an angle of +50° with respect to the fibers in the first fiber layer (14); and
(c) a matrix material comprising at least one first outer layer (12) adhered to a side of one of the three nonwoven fiber layers (14, 16, 18); wherein
(d) the multilayered material (10) comprises elastic properties that allow the multilayered material (10) to deform by stretching the multilayered material (10) over a three dimensional mold to form a footwear object.

2. The multilayered material (10) of claim 1, wherein the matrix material further comprises a second outer layer (20) adhered to a side of another one of the at least three nonwoven fiber layers (14, 16, 18).

3. The multilayered material (10) of any one of claims 1 - 2, wherein the matrix material is formed of materials selected from the group consisting of thermoplastic polyurethane, other polyurethanes, silicone, ethylene propylene diene, polyvinyl chloride, thermoplastic elastomer, polylactic acid, polyamide, and polyethylene.

4. The multilayered material (10) of any one of claims 1 - 3, wherein at least one of the outer layers (12, 20) is formed of thermoplastic polyurethane.

5. The multilayered material (10) of claim 2, wherein the matrix material is formed of the first outer layer (12) and the second outer layer (20), and wherein the first outer layer (12) and the second outer layer (20) are formed of thermoplastic polyurethane.

6. The multilayered material (10) of claim 4 or 5, wherein at least one outer layer (12, 20) formed of thermoplastic polyurethane comprises screen printing.

7. The multilayered material (10) of any one of claims 1 - 6, wherein the fibers are formed of materials selected from the group consisting of ultra high molecular weight polyethylene, other polyethylenes, polyester, nylon, Basalt, aramid, carbon, polymer/carbon composites, liquid crystal polymers, and high performance films.

8. The multilayered material (10) of claim 7, wherein the fibers are ultra high molecular weight polyethylene fibers.

9. The multilayered material (10) of any one of claims 1 - 8, further comprising a woven layer (22).

10. The multilayered material (10) of any one of claims 1 - 9, wherein the at least three nonwoven fiber layers (14, 16, 18) are punctured to improve breathability of the multilayered material (10).

11. The multilayered material (10) of any one of claims 1 - 10, further comprising a wicking lining to transport moisture away from the multilayered material (10).

12. The multilayered material (10) of any one of claims 1 - 11, further comprising a hydrophilic layer to pull moisture away from the multilayered material (10).

## Patentansprüche

1. Mehrschichtiges Material (10) zum Ausbilden dreidimensionaler Objekte, beinhaltend:
(a) eine erste, eine zweite und eine dritte nicht-gewebte Faserschicht (14, 16, 18), wobei jede Faserschicht (14, 16, 18) eine Mehrzahl von unidirektional ausgerichteten Fasern beinhaltet; wobei
(b1) die zweite Faserschicht (16) benachbart zu der ersten Faserschicht (14) so positioniert ist, dass die Fasern in der zweiten Faserschicht (16) einen Winkel von -40° im Bezug zu den Fasern in der ersten Faserschicht (14) bilden, und die dritte Faserschicht (18) benachbart einer gegenüberliegenden Seite der ersten Faserschicht (14) so positioniert ist, dass die Fasern in der dritten Faserschicht (18) einen Winkel von +40° im Bezug zu den Fasern in der ersten Faserschicht (14) bilden, oder
(b2) die zweite Faserschicht (16) benachbart zu der ersten Faserschicht (14) so positioniert ist, dass die Fasern in der zweiten Faserschicht (16) einen Winkel von -50° im Bezug zu den Fasern in der ersten Faserschicht (14) bilden, und die dritte Faserschicht (18) benachbart einer gegenüberliegenden Seite der ersten Faserschicht (14) so positioniert ist, dass die Fasern in der dritten Faserschicht (18) einen Winkel von +50° im Bezug zu den Fasern in der ersten Faserschicht (14) bilden; und
(c) ein Matrixmaterial beinhaltend zumindest eine erste äußere Schicht (12), welche an einer Seite von einer der drei nicht-gewebten Faserschichten (14, 16, 18) angehaftet ist; wobei
(d) das mehrschichtige Material (10) elastische Eigenschaften aufweist, die es dem mehrschichtigen Material (10) erlauben, sich zu dehnen, bei einem Spannen des mehrschichtigen Materials (10) über eine dreidimensionale Form hinweg, um ein Schuhwarenobjekt auszubilden.

2. Mehrschichtiges Material (10) nach Anspruch 1, wobei das Matrixmaterial weiter eine zweite äußere Schicht (20) beinhaltet, die an einer Seite einer anderen der drei nicht-gewebten Faserschichten (14, 16, 18) angehaftet ist.

3. Mehrschichtiges Material (10) nach einem der Ansprüche 1 - 2, wobei das Matrixmaterial ausgebildet ist aus Materialien ausgewählt aus der Gruppe bestehend aus thermoplastischem Polyurethan, anderen Polyurethanen, Silikon, Ethylen-Propylen-Dienen, Polyvinylchlorid, thermoplastischem Elastomer, Polyactiden, Polyamid, und Polyethylen.

4. Mehrschichtiges Material (10) nach einem der Ansprüche 1 - 3, wobei zumindest eine der äußeren Schichten (12, 20) aus thermoplastischem Polyurethan geformt ist.

5. Mehrschichtiges Material (10) nach Anspruch 2, wobei das Matrixmaterial aus der ersten äußeren Schicht (12) und der zweiten äußeren Schicht (20) geformt ist, und wobei die erste äußere Schicht (12) und die zweite äußere Schicht (20) aus thermoplastischem Polyurethan geformt sind.

6. Mehrschichtiges Material (10) nach Anspruch 4 oder 5, wobei zumindest eine der äußeren Schichten (12, 20), die aus thermoplastischem Polyurethan geformt sind, einen Filmdruck aufweist.

7. Mehrschichtiges Material (10) nach einem der Ansprüche 1 - 6, wobei die Fasern aus Materialien geformt sind, welche ausgewählt sind aus der Gruppe bestehend aus ultrahochmolekulargewichtigem Polyethylen, anderen Polyethylenen, Polyester, Nylon, Basalt, Aramid, Carbon, Polymer/Carbon-Komposit-Materialien, Flüssigkristallpolymeren, und Hochleistungsfilmen.

8. Mehrschichtiges Material (10) nach Anspruch 7, wobei die Fasern ultrahochmolekulargewichte Polyethylen-Fasern sind.

9. Mehrschichtiges Material (10) nach einem der Ansprüche 1 - 8, weiter beinhaltend eine gewebte Schicht (22).

10. Mehrschichtiges Material (10) nach einem der Ansprüche 1 - 9, wobei die zumindest drei nicht-gewebten Faserschichten (14, 16, 18) punktiert sind, um die Atmungsaktivität des mehrschichtigen Materials (10) zu verbessern.

11. Mehrschichtiges Material (10) nach einem der Ansprüche 1 - 10, weiter beinhaltend einen Kapillarfutterstoff, um Feuchtigkeit von dem mehrschichtigen Material (10) weg zu transportieren.

12. Mehrschichtiges Material (10) nach einem der Ansprüche 1 - 11, weiter beinhaltend eine hydrophile Schicht, um Feuchtigkeit von dem mehrschichtigen Material (10) weg zu ziehen.

## Revendications

1. Matériau multicouche (10) destiné à former des objets tridimensionnels, comprenant :
(a) une première, une deuxième et une troisième couches de fibres non-tissées (14, 16, 18), chaque couche de fibres (14, 16, 18) comprenant une pluralité de fibres à orientation unidirectionnelle ;
(b1) la deuxième couche de fibres (16) étant positionnée adjacente à la première couche de fibres (14) de telle sorte que les fibres de la deuxième couche de fibres (16) forment un angle de -40° avec les fibres de la première couche de fibres (14), et la troisième couche de fibres (18) étant positionnée adjacente à une face opposée de la première couche de fibres (14) de telle sorte que les fibres de la troisième couche de fibres (18) forment un angle de +40° avec les fibres de la première couche de fibres (14), ou
(b2) la deuxième couche de fibres (16) étant positionnée adjacente à la première couche de fibres (14) de telle sorte que les fibres de la deuxième couche de fibres (16) forment un angle de -50° avec les fibres de la première couche de fibres (14), et la troisième couche de fibres (18) étant positionnée adjacente à une face opposée de la première couche de fibres (14) de telle sorte que les fibres de la troisième couche de fibres (18) forment un angle de +50° avec les fibres de la première couche de fibres (14) ; et
(c) un matériau de matrice comprenant au moins une première couche extérieure (12) qui adhère à une face de l'une des trois couches de fibres non-tissées (14, 16, 18) ;
(d) le matériau multicouche (10) présentant des propriétés élastiques qui permettent au matériau multicouche (10) de se déformer par étirage du matériau multicouche (10) sur un moule tridimensionnel, pour former un objet chaussant.

2. Matériau multicouche (10) selon la revendication 1, dans lequel le matériau de matrice comprend en outre une seconde couche extérieure (20), qui adhère à une face d'une autre des au moins trois couches de fibres non-tissées (14, 16, 18).

3. Matériau multicouche (10) selon l'une quelconque des revendications 1-2, dans lequel le matériau de matrice est formé de matériaux choisis dans le groupe consistant en le polyuréthanne thermoplastique, les autres polyuréthannes, la silicone, l'éthylène-propylène-diène, le poly(chlorure de vinyle), un polymère thermoplastique, le poly(acide lactique), un polyamide et un polyéthylène.

4. Matériau multicouche (10) selon l'une quelconque des revendications 1 à 3, dans lequel au moins l'une des couches extérieures (12, 20) est formée de polyuréthanne thermoplastique.

5. Matériau multicouche (10) selon la revendication 2, dans lequel le matériau de matrice est formé de la première couche extérieure (12) et de la seconde couche extérieure (20), et la première couche extérieure (12) et la seconde couche extérieure (20) sont formées de polyuréthanne thermoplastique.

6. Matériau multicouche (10) selon la revendication 4 ou 5, dans lequel au moins une couche extérieure (12, 20) formée de polyuréthanne thermoplastique comprend une sérigraphie.

7. Matériau multicouche (10) selon l'une quelconque des revendications 1 à 6, dans lequel les fibres sont formées de matériaux choisis dans le groupe consistant en le polyéthylène à grande masse moléculaire, d'autres polyéthylènes, un polyester, le nylon, le basalte, l'aramide, le carbone, les composites polymères/carbone, les polymères cristaux liquides, et les films hautes performances.

8. Matériau multicouche (10) selon la revendication 7, dans lequel les fibres sont des fibres de polyéthylène à ultra-haute masse moléculaire.

9. Matériau multicouche (10) selon l'une quelconque des revendications 1 à 8, comprenant en outre une couche tissée (22).

10. Matériau multicouche (10) selon l'une quelconque des revendications 1 à 9, dans lequel les au moins trois couches de fibres non-tissées (14, 16, 18) sont perforées pour améliorer l'aptitude à la respiration du matériau multicouche (10).

11. Matériau multicouche (10) selon l'une quelconque des revendications 1 à 10, comprenant en outre un revêtement intérieur à effet de mèche, pour évacuer l'humidité du matériau multicouche (10).

12. Matériau multicouche (10) selon l'une quelconque des revendications 1 à 11, comprenant en outre une couche hydrophile, pour extraire l'humidité du matériau multicouche (10).
